# DEMANDE DE BREVET EUROPEEN

(11) **EP 4 628 467 A1**
(43) Date de publication de la demande: **08.10.2025**
(21) Numéro de dépôt: 25168402.3
(22) Date de dépôt: 03.04.2025
(51) Int. Cl.: C04B 28/00, C04B 28/04, C04B 28/10, C04B 28/26, C04B 40/00

(54) **PROCÉDÉ DE DÉTERMINATION D'UNE FORMULATION POUR LIANT DE CONSTRUCTION**

(30) Priorité: 03.04.2024 FR 2403453
(71) Demandeur: Materrup, 40230 Saint-Geours-de-Maremne (FR)
(72) Inventeur: Neuville, Mathieu, 40140 Soustons (FR)
(74) Mandataire: A.P.I. Conseil

(57) **Abrégé**

L'invention concerne un procédé (100) de détermination d'une formulation pour liant de construction, ledit liant de construction comportant au moins un sous-produit issu d'un procédé de concentration du lithium, ledit procédé étant mis en œuvre par un dispositif informatique comportant un module de calcul (16), ledit procédé comportant :
- une étape de réception (130a), par le module de calcul (16), d'une valeur mesurée d'au moins une propriété physicochimique de l'au moins un sous-produit issu d'un procédé de concentration du lithium ; et
- une étape de sélection (150), par le module de calcul (16), d'une quantité de l'au moins un sous-produit issu d'un procédé de concentration du lithium et d'une quantité d'au moins une composition complémentaire pour former un liant de construction ; ladite au moins une composition complémentaire étant sélectionnée parmi : au moins un précurseur, un polymère défloculant, une composition d'activation alcaline et une matrice argileuse crue.

## Description

### Domaine technique

L'invention concerne le domaine des matériaux de construction et plus particulièrement de la valorisation de sous-produits issus de l'industrie. En particulier, l'invention concerne un procédé de détermination d'une formulation pour liant de construction, d'un procédé de préparation d'un liant de construction et d'un liant de construction, d'un matériau de construction et d'un système adapté.

### Technique antérieure

Ci-après, nous décrivons l'art antérieur connu à partir duquel l'invention a été développée.

Le secteur de la construction contribue de manière significative aux émissions mondiales de gaz à effet de serre, représentant environ 37 % du total. Ce pourcentage élevé est dû en grande partie à la production et à l'utilisation de matériaux à fortes émissions comme le ciment, l'acier et l'aluminium.

Ainsi, la production de ciment est un contributeur majeur aux émissions de carbone dans le secteur de la construction, principalement en raison de la nature énergivore de son processus de production et des réactions chimiques impliquées dans la fabrication du clinker, le principal composant du ciment. Le défi consiste à réduire l'empreinte carbone du ciment sans compromettre ses performances ni augmenter significativement ses coûts. Une partie des stratégies proposées comprennent l'amélioration de l'efficacité énergétique des processus de transformation, l'utilisation de carburants alternatifs et l'adoption de nouvelles technologies pour la production de clinker. Toutefois, une majorité des études portent sur la réduction de la teneur en clinker du ciment en le remplaçant par des matériaux cimentaires supplémentaires comme les cendres volantes, les argiles calcinées, les cendres de balle de riz ou les laitiers de hauts fourneaux.

L'utilisation de ces matériaux cimentaires supplémentaires comme les cendres volantes, un sous-produit de la combustion du charbon, et les laitiers de hauts fourneaux, un sous-produit de la fabrication de l'acier, dans la production de ciment offre un double avantage : réduire l'empreinte carbone du ciment et résoudre les problèmes d'élimination des déchets. Ces matériaux peuvent notamment remplacer au moins partiellement le clinker dans le ciment, réduisant ainsi la consommation globale d'énergie et les émissions de CO₂ associées à la production de ciment.

Toutefois, pour certains de ces matériaux cimentaires supplémentaires la disponibilité reste limitée et pour d'autres c'est l'empreinte du matériau de construction final qui n'est pas suffisamment réduite. Ainsi, la recherche de composants et de précurseurs alternatifs pour le ciment bas carbone implique d'explorer de nouveaux matériaux pouvant servir dans la fabrication de ciment bas carbone et circulaire.

Il a été récemment montré que l'incorporation de sous-produits de la concentration de lithium (par exemple le Lithium Slag en terminologie anglo-saxonne) pourrait confirmer le potentiel du LS à servir de matériau cimentaire supplémentaire (Gou H. et al., Cementitious and Geopolymer Composites with Lithium Slag Incorporation. Materials. 2024; 17(1):142. https://doi.org/10.3390/ma17010142). L'utilisation de ces sous-produits pourrait s'inscrire dans une démarche d'économie circulaire dans laquelle les déchets ou les sous-produits de concentration de Lithium sont utilisés pour réduire l'utilisation de matériaux à empreinte carbone forte ou modérée dans la construction tels que le clinker ou les métakaolins.

Toutefois, l'utilisation de ces sous-produits de la concentration de lithium dans des liants de construction a produit des ciments avec des résistances à la compression variable ainsi que des problématiques de retrait au séchage. Ainsi, il existe un besoin pour le développement de mélanges composites avec des sous-produits de la concentration de lithium qui optimisent les résistances à la compression, à la flexion et à la traction ainsi que le retrait. Pour cela, une première étape est de développer une méthode de détermination de compositions optimisées pour liant de construction intégrant ces sous-produits de la concentration de lithium.

### Résumé de l'invention

L'invention vise à pallier ces inconvénients. Ce qui suit présente un résumé simplifié d'aspects, de modes de réalisation et d'exemples sélectionnés de la présente invention dans le but de fournir une compréhension de base de l'invention. Cependant, ce résumé ne constitue pas un aperçu exhaustif de tous les aspects, modes de réalisation et exemples de l'invention. Son seul but est de présenter des aspects, modes de réalisation et exemples sélectionnés de l'invention sous une forme concise en guise d'introduction à la description plus détaillée des aspects, modes de réalisation et exemples de l'invention qui suivent le résumé.

L'invention vise en particulier un procédé de détermination d'une formulation pour un liant de construction, ledit liant de construction comportant au moins un sous-produit issu d'un procédé de concentration du lithium, ledit procédé étant mis en œuvre par un dispositif informatique comportant un module de calcul, ledit procédé comportant :
- une étape de réception, par le module de calcul, d'une valeur mesurée d'au moins une propriété physicochimique de l'au moins un sous-produit issu d'un procédé de concentration du lithium ; et
- une étape de sélection, par le module de calcul, d'une quantité de l'au moins un sous-produit issu d'un procédé de concentration du lithium et d'une quantité d'au moins une composition complémentaire pour former un liant de construction ; ladite au moins une composition complémentaire étant sélectionnée parmi : au moins un précurseur, un polymère défloculant, une composition d'activation alcaline et une matrice argileuse crue.

L'invention vise de façon préférée un procédé de détermination d'une formulation pour un liant de construction, ledit liant de construction comportant au moins un sous-produit issu d'un procédé de concentration du lithium, ledit procédé étant mis en œuvre par un dispositif informatique comportant un module de calcul, ledit procédé comportant :
- une étape de réception, par le module de calcul, d'une valeur mesurée d'au moins une propriété physicochimique de l'au moins un sous-produit issu d'un procédé de concentration du lithium ; et
- une étape de sélection, par le module de calcul, d'une quantité de l'au moins un sous-produit issu d'un procédé de concentration du lithium et d'une quantité d'au moins une composition complémentaire pour former un liant de construction ; ladite au moins une composition complémentaire comporte au moins : un polymère défloculant et/ou une matrice argileuse crue.

Alors que l'utilisation de sous-produits de la concentration du lithium est à ses débuts, la demanderesse a développé un procédé permettant la détermination d'une formulation pour liant de construction tirant avantage des caractéristiques de ce sous-produit tout en venant compléter ses lacunes par des compositions complémentaires.

Cela permet de générer une composition présentant des caractéristiques mécaniques adaptées aux exigences du secteur de la construction.

Selon d'autres caractéristiques optionnelles du procédé, ce dernier peut inclure facultativement une ou plusieurs des caractéristiques suivantes, seules ou en combinaison :
- l'au moins une propriété physicochimique de l'au moins un sous-produit issu d'un procédé de concentration du lithium est sélectionnée parmi : la teneur en lithium, la granulométrie, la teneur en impuretés, la teneur en SiO₂, la teneur en Al₂O₃, la teneur en CaO, la teneur en MgO, la teneur en Fe₂O₃, l'analyse élémentaire, la teneur en oxydes métalliques, la salinité, le pH, les propriétés rhéologiques (dont la viscosité), la surface spécifique, la concentration en composés organiques, la concentration en composés organiques volatiles, la conductivité ionique, la teneur en phase amorphe et le facteur de forme des particules. Ces propriétés physicochimiques ont été identifiées comme les plus pertinentes pour correctement sélectionner la composition de la formulation. De façon préférée, l'au moins une propriété physicochimique de l'au moins un sous-produit issu d'un procédé de concentration du lithium est sélectionnée parmi : la teneur en lithium, la granulométrie, la teneur en SiO₂, la teneur en Al₂O₃, et la teneur en CaO. Ces propriétés physicochimique ont été identifiées comme les plus pertinentes pour correctement sélectionner la composition de la formulation.
- l'étape de sélection, par le module de calcul, comporte l'utilisation : d'une comparaison à une plage de référence, d'un calcul matriciel, d'une approche heuristique, d'une optimisation multi-critères, de systèmes experts basés sur des règles, d'algorithmes d'optimisation (comme les méthodes de gradient, etc.), d'algorithmes évolutionnaires (comme les algorithmes génétiques, etc.), de modèles fondés sur la régression statistique (simple ou multiple), éventuellement combinés à des données empiriques et/ou d'un modèle d'apprentissage.
- l'au moins un sous-produit issu d'un procédé de concentration de lithium est issu d'un procédé de préparation d'hydroxyde de lithium ou de carbonate de lithium.
- l'au moins un sous-produit issu d'un procédé de concentration de lithium présente une D50 inférieure ou égale à 20µm.
- l'au moins un sous-produit issu d'un procédé de concentration de lithium présente une D90 inférieure ou égale à 100µm.
- le sous-produit issu d'un procédé de concentration du lithium est une composition comportant au moins 35 % de SiO₂.
- le sous-produit issu d'un procédé de concentration du lithium est une composition comportant au moins 15 % en poids de Al₂O₃.
- le sous-produit issu d'un procédé de concentration du lithium est une composition comportant au moins 20 % en poids de CaCO₃. De préférence, l'au moins un sous-produit issu d'un procédé de concentration du lithium est une composition comportant au moins 50 % en poids de CaCO₃. En particulier, le CaCO₃ se présente sous la forme de poudre.
- l'au moins un sous-produit issu d'un procédé de concentration du lithium est une composition comportant au plus 2 % en poids de lithium, de préférence au plus 1,75 % en poids de lithium, de façon plus préférée au plus 1,5% en poids de lithium et de façon encore plus préférée au plus 1,25% en poids de lithium.
- l'au moins un sous-produit issu d'un procédé de la concentration du Lithium comporte une teneur en trioxyde de soufre (SO₃) inférieure ou égale à 15 % en poids, de préférence inférieure ou égale à 12 % en poids, de façon plus préférée inférieure ou égale à 10 % en poids et de façon encore plus préférée inférieure ou égale à 8 % en poids. Cela permet d'améliorer la stabilité du matériau de construction sur le long terme.
- l'au moins un sous-produit issu d'un procédé de la concentration du Lithium comporte une teneur en phase amorphe supérieure ou égale à 15 %, de préférence supérieure ou égale à 20%, de façon plus préférée supérieure ou égale à 25% et de façon encore plus préférée supérieure ou égale à 30%. Cela améliore les performances du liant de construction.
- l'au moins un sous-produit issu d'un procédé de la concentration du Lithium est mélangé avec un polymère défloculant, de préférence le mélange entre l'au moins un sous-produit issu d'un procédé de la concentration du Lithium et le polymère

défloculant est réalisé avant le mélange avec d'éventuelles autres compositions complémentaires. Cela permet d'améliorer notamment les performances du liant de construction en particulier lorsque le sous-produit issu d'un procédé de concentration du lithium est ajouté à une concentration supérieure à 20 % en poids du liant de construction, de préférence à partir une concentration supérieure à 30 % en poids par rapport au poids sec du liant de construction. En particulier, lorsque le polymère défloculant est présent, il est mélangé avec l'au moins un sous-produit issu d'un procédé de la concentration du Lithium, de préférence le mélange entre l'au moins un sous-produit issu d'un procédé de la concentration du Lithium et le polymère défloculant est réalisé avant le mélange avec d'éventuelles autres compositions complémentaires.
- il comporte en outre une étape d'acquisition d'au moins une valeur de référence.
- les valeurs de références comportent des corrélations entre des valeurs mesurées d'au moins une propriété physicochimique de l'au moins un sous-produit issu d'un procédé de concentration du lithium d'une part et des quantités de compositions complémentaires adaptées audit sous-produit issu d'un procédé de concentration du lithium d'autre part. Ce mélange vient substituer partiellement les ressources à empreinte carbone forte ou modérée habituellement utilisée dans les liant de construction (e.g. clinker, laitiers de hauts fourneaux...). En particulier, il comporte en outre une étape d'acquisition d'au moins une valeur de référence et en ce que la ou les valeurs de références comportent des corrélations entre des valeurs mesurées d'au moins une propriété physicochimique de l'au moins un sous-produit issu d'un procédé de concentration du lithium d'une part et des quantités de compositions complémentaires adaptées audit sous-produit issu d'un procédé de concentration du lithium d'autre part.
- la comparaison à des valeurs de référence correspond à l'utilisation d'un modèle d'apprentissage entrainé. En particulier, il comporte en outre des comparaisons entre la ou les valeurs mesurées de propriétés physicochimiques avec des valeurs de références et en ce la comparaison à des valeurs de référence correspond à l'utilisation d'un modèle d'apprentissage entrainé.
- les quantités sélectionnées conduisent à une formulation de liant de construction présentant une concentration massique en lithium inférieure ou égale à 1%, de préférence inférieure ou égale à 0,75%, de façon plus préférée inférieure ou égale à 0,5%, et de façon encore plus préférée inférieure ou égale à 0,25%.
- les quantités sélectionnées conduisent à une formulation de liant de construction présentant une concentration massique en Al₂O₃ supérieure ou égale à 5%, de préférence supérieure ou égale à 7%, de façon plus préférée supérieure ou égale à 8%, et de façon encore plus préférée supérieure ou égale à 9%.
- les quantités sélectionnées conduisent à une formulation de liant de construction présentant une concentration massique en Al₂O₃ inférieure ou égale à 15%, de préférence inférieure ou égale à 14%.
- les quantités sélectionnées conduisent à une formulation de liant de construction présentant une concentration massique en SiO₂ supérieure ou égale à 20%, de préférence supérieure ou égale à 25%, de façon plus préférée supérieure ou égale à 30%.
- les quantités sélectionnées conduisent à une formulation de liant de construction présentant une concentration massique en CaO supérieure ou égale à 35%, de préférence supérieure ou égale à 40%, de façon plus préférée supérieure ou égale à 42%.
- les quantités sélectionnées conduisent à une formulation de liant de construction présentant une concentration massique en CaO inférieure ou égale à 60%, de préférence supérieure ou égale à 57%, de façon plus préférée supérieure ou égale à 55%.
- les quantités sélectionnées conduisent à une formulation de liant de construction présentant une concentration massique en MgO inférieure ou égale à 5%, de préférence inférieure ou égale à 4%, de façon plus préférée inférieure ou égale à 3%.
- les quantités sélectionnées conduisent à une formulation de liant de construction présentant une concentration massique en Fe₂O₃ inférieure ou égale à 5%, de préférence inférieure ou égale à 4%, de façon plus préférée inférieure ou égale à 3%.
- l'au moins une composition complémentaire comporte au moins un précurseur sélectionné parmi : laitiers tels que des laitiers de hauts fourneaux, des laitiers d'aciérie, des laitiers de cubilots ; des cendres volantes, des pouzzolanes naturelles, des fumées de silice, des fillers calcaires micronisés, des fillers siliceux micronisés tels que de la poudre de verre, des fillers siliceux, de la vatérite synthétique, des terres de diatomée, des scories broyées ou leurs combinaisons ; de préférence sélectionné parmi : des laitiers de hauts fourneaux, du filler calcaire micronisé ; de la vatérite telle que de la vatérite micrométrique ou nanométrique ; ou leurs combinaisons.
- l'au moins une composition complémentaire comporte au moins un activateur sélectionné parmi : clinker, CEM I, chaux, silicates tels que le silicate de sodium, des carbonates tels que le carbonate de sodium ou leurs combinaisons. De préférence, l'au moins une composition complémentaire comporte du clinker. Avantageusement, la teneur en clinker peut toutefois être réduite avec une teneur massique par rapport au poids sec de liant inférieure ou égale à 30 %.
- l'au moins une composition complémentaire comporte au moins une matrice argileuse crue par rapport au poids sec de liant de construction.

**Selon un deuxième objet,** l'invention porte sur un **liant de construction** susceptible d'être obtenu par le procédé selon l'invention, caractérisé en ce qu'il comprend au moins un sous-produit issu d'un procédé de concentration du lithium, et au moins une composition complémentaire, l'au moins une composition complémentaire étant sélectionnée parmi un précurseur, un polymère défloculant, une matrice argileuse crue et/ou une composition d'activation alcaline.

En particulier, l'invention porte sur un liant de construction susceptible d'être obtenu par le procédé de préparation d'un liant de construction selon l'invention, caractérisé en ce qu'il comprend au moins un sous-produit issu d'un procédé de concentration du lithium, et au moins une composition complémentaire, l'au moins une composition complémentaire comporte au moins : une matrice argileuse crue, de préférence au moins 10 % en poids de matrice argileuse crue par rapport au poids sec de liant de construction et/ou un polymère défloculant. Lorsque le polymère défloculant et la matrice argileuse sont présents, cela peut par exemple prendre la forme de plusieurs compositions complémentaires : une composition complémentaire comportant une ou plusieurs matrices argileuses crues et une composition complémentaire comportant un ou plusieurs polymères défloculants. Aussi, cela peut correspondre à une composition complémentaire comportant une ou plusieurs matrices argileuses crues et un ou plusieurs polymères défloculants. De la même façon, lorsque seul le polymère défloculant ou la matrice argileuse crue sont présents alors il peut y avoir une composition complémentaire comportant un ou plusieurs polymères défloculants ou bien plusieurs compositions complémentaires chacune comportant un polymère défloculant.

Selon d'autres caractéristiques optionnelles du liant, ce dernier peut inclure facultativement une ou plusieurs des caractéristiques suivantes, seules ou en combinaison :
- il comporte une concentration massique en CaO inférieure ou égale à 60% par rapport au poids sec de liant de construction.
- il comporte une concentration massique en Al₂O₃ supérieure ou égale à 5% par rapport au poids sec de liant de construction.
- il comporte une concentration massique en MgO inférieure ou égale à 5% par rapport au poids sec de liant de construction.
- Il comporte au moins une matrice argileuse crue, de préférence au moins 10 % en poids de matrice argileuse crue.
- l'au moins une composition complémentaire peut être sélectionnée en outre parmi au moins : un précurseur, et/ou une composition d'activation alcaline.
- il comporte une concentration massique en lithium d'au plus 2 % par rapport au poids sec de liant de construction.

Selon un autre aspect, l'invention porte sur un procédé de préparation d'un liant de construction, ledit procédé de préparation du liant de construction comportant une étape de mélange entre au moins un sous-produit issu d'un procédé de concentration du lithium et au moins une composition complémentaire selon une composition de liant de construction du procédé de détermination selon l'invention.

En particulier, l'invention porte sur un procédé de préparation d'un liant de construction, ledit procédé de préparation du liant de construction comportant :
- (i) la mise en œuvre du procédé de détermination selon l'invention, dans lequel on détermine au moins un sous-produit issu d'un procédé de concentration du lithium et au moins une composition complémentaire ; et
- (ii) une étape de mélange entre ce sous-produit et ladite composition complémentaire, selon la composition de liant issue dudit procédé.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1] La figure 1 représente un procédé de détermination d'une formulation pour liant de construction comportant au moins un sous-produit issu d'un procédé de concentration du lithium.
[Fig. 2] La figure 2 représente un procédé de préparation d'un liant de construction selon l'invention.
[Fig. 3] La figure 3 représente un procédé de préparation d'un matériau de construction selon l'invention.

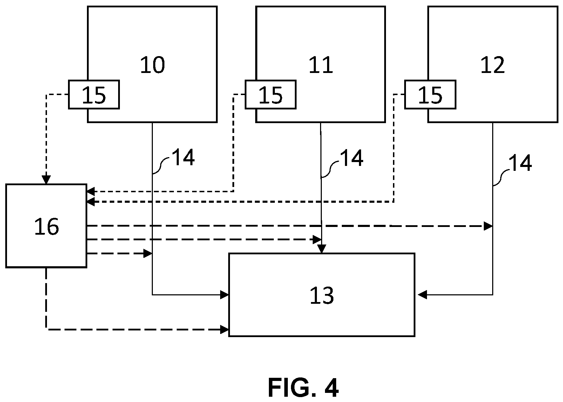

[Fig. 4] La figure 4 représente un système de préparation d'un liant de construction selon l'invention.

Les figures ne respectent pas nécessairement les échelles, notamment en épaisseur, et ce à des fins d'illustration.

Des aspects de la présente invention sont décrits en référence à des organigrammes et / ou à des schémas fonctionnels de procédés, d'appareils (systèmes) et de produits de programme d'ordinateur selon des modes de réalisation de l'invention.

Sur les figures, les organigrammes et les schémas fonctionnels illustrent l'architecture, la fonctionnalité et le fonctionnement d'implémentations possibles de systèmes, de procédés et de produits de programme d'ordinateur selon divers modes de réalisation de la présente invention. A cet égard, chaque bloc dans les organigrammes ou blocs-diagrammes peut représenter un système, un dispositif, un module ou un code, qui comprend une ou plusieurs instructions exécutables pour mettre en oeuvre la ou les fonctions logiques spécifiées. Dans certaines implémentations, les fonctions associées aux blocs peuvent apparaître dans un ordre différent que celui indiqué sur les figures. Par exemple, deux blocs montrés successivement peuvent, en fait, être exécutés sensiblement simultanément, ou les blocs peuvent parfois être exécutés dans l'ordre inverse, en fonction de la fonctionnalité impliquée. Chaque bloc des schémas de principe et / ou de l'organigramme, et des combinaisons de blocs dans les schémas de principe et / ou l'organigramme, peuvent être mis en oeuvre par des systèmes matériels spéciaux qui exécutent les fonctions ou actes spécifiés ou effectuer des combinaisons de matériel spécial et d'instructions informatiques.

### Description des modes de réalisation

Ci-après, nous décrivons un résumé de l'invention et le vocabulaire associé, avant de présenter les inconvénients de l'art antérieur, puis enfin de montrer plus en détail comment l'invention y remédie.

Dans la suite de la description, le terme « **liant** » peut être compris comme une formulation permettant d'assurer l'agglomération de matériaux entre eux, notamment lors de la prise, puis du durcissement d'un matériau de construction. Ainsi, il permet en particulier d'assurer l'agglomération du sable et autres constituants du matériau de construction avec les constituants du liant. Le liant selon l'invention est en particulier un liant hydraulique, c'est-à-dire que le durcissement se fait au contact de l'eau.

Le terme « **formulation** » peut être défini comme les valeurs de teneurs en les différents composants d'une composition.

Le terme « **composition** » peut être défini comme toute entité composée d'un unique composé quasi pur ou d'un mélange de plusieurs composants. Cette entité peut se présenter sous différentes formes physiques, y compris mais sans s'y limiter, les suspensions, les solutions, ou à l'état solide y compris sous forme de poudre. La composition peut être caractérisée par sa formulation spécifique, y compris les proportions de ses constituants, ses propriétés physico-chimiques, et son procédé de fabrication. L'expression « **composition complémentaire** » peut être définie comme correspondant à l'entité ou aux entités venant s'associer au sous-produit d'un procédé de concentration de lithium pour former un liant de construction.

Le terme « **sous-produit** » au sens de l'invention peut correspondre à un produit, une composition ou une matière secondaire qui est produit ou isolé au cours d'un processus industriel tel que, par exemple, l'extraction, la purification, la transformation, la production, la concentration ou la destruction d'un produit principal. Il n'est généralement pas l'objectif principal du processus et peut avoir une caractéristique ou des valeurs différentes de celles du produit principal

L'expression « **sous-produit issu d'un procédé de concentration du lithium** » au sens de l'invention correspond donc à un sous-produit obtenu lors de la concentration et du traitement du lithium. Le sous-produit d'un procédé de concentration du lithium peut présenter diverses caractéristiques physiques et chimiques associées aux nombreux procédés développés dans le cadre de l'industrie naissante du traitement du lithium. Il peut correspondre à un sous-produit obtenu à n'importe quelle étape d'un procédé visant à obtenir un lithium plus concentré.

Au sens de l'invention, un « **agent défloculant** », « **défloculant** », « **polymère défloculant** » ou « **agent de défloculation** », peut correspondre à un composé capable de dissocier des agrégats et des colloïdes notamment en suspension aqueuse. Des agents défloculant ont par exemple été utilisés dans un contexte de forage ou d'extraction pétrolière pour rendre l'argile plus fluide et faciliter l'extraction ou le forage.

On entend par « **composition d'activation alcaline** », toute composition ayant pour fonction d'accélérer la dispersion d'une source d'aluminosilicate favorisant la formation d'hydrates stables à faible solubilité et la formation d'une structure compacte avec ces hydrates, augmentant ainsi la résistance mécanique des matériaux incorporant une telle composition d'activation.

L'expression « **matrice argileuse** », au sens de l'invention peut correspondre à un ou plusieurs matériaux rocheux à base de silicates hydratés ou d'aluminosilicates de structure lamellaire, ladite matrice argileuse étant composée de particules fines provenant en général de l'altération de silicates à charpente tridimensionnelle, tels que les feldspaths. Une matrice argileuse peut ainsi comporter un mélange de tels matériaux rocheux pouvant par exemple consister en de la kaolinite, de l'illite, de la smectite, de la bentonite, de la chlorite, de la vermiculite, ou leurs mélanges. En outre, une matrice argileuse peut comporter des limons.

Au sens de l'invention, l'expression « **matrice argileuse crue** », peut correspondre à une matrice argileuse n'ayant pas subi d'étape de calcination. Par exemple, cela correspond à une matrice argileuse n'ayant pas subi une montée en température supérieure à 300°C, de préférence supérieure à 200°C et plus préférentiellement une température supérieure à 150°C. En effet, la matrice argileuse crue peut subir une étape de séchage par chauffage nécessitant une montée en température généralement sensiblement égale ou inférieure à 150°C mais pas d'étape de calcination. Une matrice argileuse crue peut de préférence comporter un mélange de matériaux rocheux pouvant par exemple comporter de la kaolinite, de l'illite, de la smectite, micas tels que la muscovite, de la bentonite, de la chlorite, de la vermiculite, ou leurs mélanges, ainsi que des limons.

En particulier, au sens de l'invention, une « matrice argileuse crue » peut être une « **matrice argileuse crue activée** ». Une « **matrice argileuse crue activée** » peut correspondre à une matrice argileuse crue ayant subi un traitement d'activation destiné à améliorer sa réactivité chimique, et plus généralement les performances mécaniques du liant l'intégrant, tout en préservant son caractère non calciné. Ce traitement d'activation peut être réalisé par activation mécanique, telle que le broyage intensif permettant une réduction granulométrique et une augmentation de la surface spécifique ; par activation chimique, notamment par traitement acide ou alcalin conduisant à la formation de nouveaux sites réactifs en surface ; ou encore par traitement avec des solvants aprotiques polaires, améliorant ainsi les propriétés physico-chimiques d'échange ionique et de gonflement de la matrice argileuse. Le traitement d'activation peut être réalisé par une combinaison des traitements mécaniques, chimique et à base de solvant. Une matrice argileuse crue activée conserve ainsi des températures de traitement inférieures à 300°C, de préférence à 200°C et plus préférentiellement à 150°C.

L'expression « **propriété physicochimique** », notamment lorsqu'elle se réfère à un produit, peut correspondre au sens de l'invention aux propriétés qui découlent à la fois de l'état physique et de la composition chimique du produit. L'expression « propriété physicochimique » peut ainsi être sélectionnée parmi : la teneur en lithium, la granulométrie, la teneur en impuretés, la teneur en SiO₂, la teneur en Al₂O₃, la teneur en CaO, la teneur en MgO, la teneur en Fe₂O₃, l'analyse élémentaire, la teneur en oxydes métalliques, la salinité, le pH, les propriétés rhéologiques (dont la viscosité), la surface spécifique, la concentration en composés organiques, la concentration en composés organiques volatiles, la conductivité ionique, la teneur en phase amorphe et le facteur de forme des particules. Ces propriétés physicochimiques peuvent être mesurées selon les méthodes connues de l'état de la technique. Par exemple, des analyses par spectroscopie ou spectrométrie élémentaire permettront de mesurer : la teneur en lithium (e.g. par ICP-MS - « Inductively Coupled Plasma - Mass Spectrometry » en terminologie anglosaxonne ou ICP-OES - « Inductively Coupled Plasma - Optical Emission Spectroscopy » en terminologie anglosaxonne) ; les teneurs en SiO₂, Al₂O₃, CaO, MgO, ou Fe₂O₃ (e.g. fluorescence X - XRF « X-Ray Fluorescence » en terminologie anglosaxonne ou spectroscopie ICP - « Inductively Coupled Plasma » en terminologie anglosaxonne) ; et plus largement les teneurs en oxydes métalliques (e.g. TiO₂, MnO, ZnO, etc.) par XRF ou ICP-OES et les autres analyses élémentaire (éléments majeurs, traces, métaux lourds) par ICP-MS/OES ou AAS (« Atomic Absorption Spectroscopy » en terminologie anglosaxonne) selon les éléments ciblés. Les analyses élémentaires organique et carbone total peuvent être réalisées par des analyses TOC (« Total Organic Carbon » en terminologie anglosaxonne) ou CHNS (« Carbon, Hydrogen, Nitrogen, Sulfur, Analysis » en terminologie anglosaxonne) ; les concentrations en composés organiques volatils (COV) peuvent être mesurées par GC-FID (« Gas Chromatography - Flame lonization Detector » en terminologie anglosaxonne) ou GC-MS (« Gas Chromatography - Mass Spectrometry » en terminologie anglosaxonne) avec échantillonnage par purge et piégeage soit « purge and trap » en terminologie anglosaxonne, et l'analyse élémentaire organique (C, H, N, S, O) peut être réalisée par un analyseur CHNS-O avec combustion catalytique. La personne du métier pourra utiliser des techniques de diffraction et d'analyse structurale pour la caractérisation cristallographique ou amorphe des phases solides telle que la mesure de la teneur en phase amorphe (e.g. Diffraction des rayons X - DRX) ou l'identification minéralogique (DRX pour les phases cristallines). La granulométrie pourra être mesurée par diffraction laser, tamisage, et/ou sédimentation tandis que le facteur de forme des particules est généralement mesuré par microscopie électronique (« Scanning Electron Microscope »/ « Transmission Electron Microscope » en terminologie anglosaxonne). La surface spécifique peut être mesurée par la méthode BET (Brunauer-Emmett-Teller), la salinité par Conductimétrie, la conductivité ionique par un conductimètre, le pH par un pH-mètre et les propriétés rhéologiques (e.g. viscosité, seuil d'écoulement) par viscosimètre ou rhéomètre.

L'expression « **profil granulométrique** » au sens de l'invention, peut correspondre à la répartition des particules d'une composition en fonction de l'importance pondérale relative des différentes classes de particules identifiées par leur taille (e.g. diamètre).

L'expression « **valeur de référence** » au sens de l'invention, peut correspondre à une ou plusieurs valeurs prédéterminées permettant en combinaison avec des valeurs mesurées de déterminer des quantités et des compositions complémentaires adaptées à la formation d'un liant de construction. Les valeurs de référence servent de guide et elles peuvent prendre par exemple la forme d'un algorithme, d'un modèle d'apprentissage, de valeurs limites ou encore d'abaques.

L'expression « **% en poids** » en lien avec une composition, un liant ou un matériau de construction doit être compris comme étant une proportion par rapport au poids sec de la composition, du liant ou du béton de site. Le poids sec correspond au poids avant l'addition d'eau par exemple nécessaire à la formation d'un matériau de construction.

L'expression « **mélange réalisé à sec »** au sens de l'invention peut correspondre à l'action de mélanger un ou plusieurs constituants sans ajout d'eau ou de tout autre liquide. Avantageusement, l'hygrométrie d'un mélange réalisé à sec ne dépasse pas les 5 % d'H₂O et de préférence les 3 % d'H₂O, de façon plus préférée les 2% d'H₂O.

L'expression « **modèle d'apprentissage** » peut correspondre, au sens de l'invention, dans le contexte de l'intelligence artificielle et de l'apprentissage automatique, à une structure mathématique ou un algorithme conçu pour apprendre des motifs (dits patterns en terminologie anglo-saxonne) ou des comportements à partir de données mesurées ou rentrées dans une base de données.

Les procédés de fabrication de liant de construction présentent généralement une forte empreinte environnementale. Des méthodes ont été proposées pour réduire cet impact et notamment l'utilisation de sous-produit de concentration du lithium. Toutefois, une variabilité importante peut être observée dans les performances des liants de constructions générés.

Face à ce constat, la demanderesse a développé une nouvelle solution permettant de déterminer une formulation pour liant de construction bas carbone. Avantageusement le liant de construction pourra présenter de bonnes propriétés mécaniques telles qu'un faible retrait et une résistance à la compression élevée à jeune âge et à 28 jours. Comme cela est détaillé par la suite, la solution développée repose sur la définition d'une composition intégrant au moins un sous-produit issu d'un procédé de concentration du lithium et des composés complémentaires, dans des quantités adaptées permettant de générer un liant répondant aux exigences du métier.

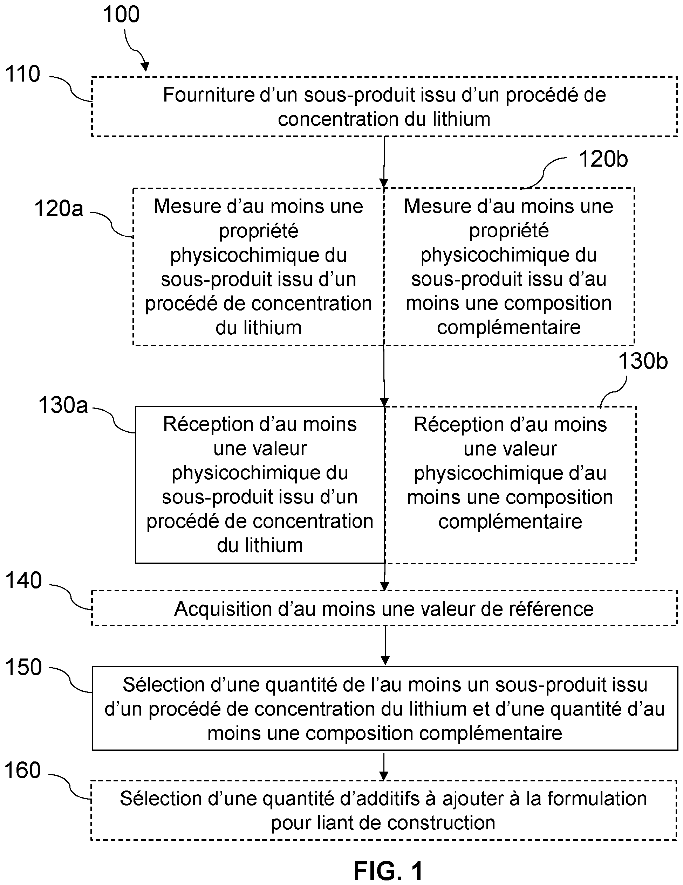

Ainsi, selon un **premier aspect** et comme illustré à la **figure 1****,** l'invention concerne **un procédé 100 de détermination d'une formulation pour liant de construction** comportant au moins un sous-produit issu d'un procédé de concentration du lithium. De préférence, un procédé 100 de détermination d'une formulation pour liant de construction, ledit liant de construction comporte au moins un sous-produit issu d'un procédé de concentration du lithium selon l'invention est mis en oeuvre par un dispositif informatique comportant un module de calcul 16.

Comme cela est illustré à la figure 1, le procédé comporte : une étape de réception 130a d'une valeur mesurée d'au moins une propriété physicochimique de l'au moins un sous-produit issu d'un procédé de concentration du lithium ; et une étape de sélection 150 d'une quantité adaptée d'au moins une composition complémentaire à combiner à l'au moins un sous-produit.

L'au moins un sous-produit issu d'un procédé de concentration du lithium peut correspondre à tout sous-produit généré lors d'un procédé de concentration du lithium. En particulier, l'au moins un sous-produit issu d'un procédé de concentration de lithium est issu d'un procédé de préparation d'hydroxyde de lithium ou de carbonate de lithium à haut niveau de pureté. Par exemple, un sous-produit dans ce procédé peut correspondre à des scories de lithium, des carbonates de lithium, des sables et calcaires ou encore des silicates de lithium.

Généralement, le sous-produit utilisé dans le cadre de la présente invention comportera une faible teneur en lithium. Par exemple, un sous-produit utilisé dans le cadre de la présente invention comportera moins de 5% en poids sec de lithium. Il pourra comporter au plus 2 % en poids de lithium, de préférence au plus 1,75 % en poids de lithium, de façon plus préférée au plus 1,5% en poids de lithium et de façon encore plus préférée au plus 1,25% en poids de lithium.

Le sous-produit issu d'un procédé de concentration du lithium peut correspondre à une composition comportant au moins 35 % de SiO₂. Le sous-produit issu d'un procédé de concentration du lithium peut correspondre à une composition comportant au moins 15 % en poids de Al₂O₃.

En outre, le sous-produit issu d'un procédé de concentration du lithium peut correspondre à une composition comportant au moins 20 % en poids de CaCO₃, de préférence au moins 50 % en poids de CaCO₃.

Avantageusement, le sous-produit généré lors d'un (ou issu d'un) procédé de concentration du lithium est utilisé sous forme solide, par exemple sous la forme d'une poudre.

En particulier, l'au moins un sous-produit issu d'un procédé de concentration de lithium présente une D50 inférieure ou égale à 50µm, de préférence inférieure ou égale à 40µm, et de façon plus préférée inférieure ou égale à 20µm. En outre, l'au moins un sous-produit issu d'un procédé de concentration de lithium présente une D90 inférieure ou égale à 200µm, de préférence une D90 inférieure ou égale à 150µm, et de façon plus préférée une D90 inférieure ou égale à 100µm.

Comme cela a été décrit, la présente invention vise à combiner un sous-produit de concentration du lithium avec une ou plusieurs compositions complémentaires pour former un liant de construction.

L'au moins une composition complémentaire peut être sélectionnée parmi : au moins un précurseur, un polymère défloculant, une composition d'activation alcaline et/ou une matrice argileuse crue ;

L'au moins une composition complémentaire peut comporter un précurseur.

Le précurseur peut être sélectionné parmi : des laitiers tels que des laitiers de hauts fourneaux, des laitiers d'aciérie, des laitiers de cubilots ; des cendres volantes, des pouzzolanes naturelles, des fumées de silice, des fillers calcaires micronisés, des fillers siliceux micronisés tels que de la poudre de verre, des fillers siliceux, de la vatérite synthétique, des terres de diatomée, des scories broyées ou leurs combinaisons.

Avantageusement, le précurseur peut être sélectionné parmi : des laitiers de hauts fourneaux, du filler calcaire micronisé ; de la vatérite telle que de la vatérite micrométrique ou nanométrique ; ou leurs combinaisons.

Dans l'invention, lorsque le précurseur est présent, il peut l'être à une teneur d'au moins 1 % en poids du liant de construction, de préférence à une teneur d'au moins 10 % en poids du liant de construction, de manière encore plus préférée à une teneur d'au moins 15 % en poids du liant de construction. En outre, de façon préférée, le liant de construction selon l'invention comprend au plus 25 % en poids de précurseur, de façon plus préférée au plus 20 % en poids de précurseur.

Ainsi, en particulier, un liant de construction selon l'invention peut comprendre entre 1 % et 25 % en poids de précurseur, de façon préférée entre 10 % et 25 % en poids de précurseur, de façon plus préférée entre 10 % et 20 % en poids de précurseur.

En outre, le précurseur selon la présente invention peut comporter une argile calcinée. L'argile calcinée peut être une matière argileuse crue qui a au préalable subit un traitement thermique, de préférence à une température d'au moins 450°C et d'au maximum 900°C, ou dans un procédé de calcination « éclair » ou « flash » selon une terminologie anglo-saxonne à des températures comprises entre 600°C et 900 °C.

De manière préférée, la matière argileuse calcinée est déshydroxylée en une matière amorphe tandis que la formation de phases cristallines d'aluminosilicate à haute température telles que la mullite est empêchée. La matrice argileuse calcinée est de préférence amorphe, et a une activité pouzzolanique.

La matrice argileuse calcinée peut être formée avec toutes les matrices argileuses mentionnées dans la présente description. La matrice argileuse calcinée peut comporter, à titre d'exemples non limitatifs, au moins une espèce minérale sélectionnée parmi : Metakaolin, Metaillite et/ou Metamontmorillonite. De préférence, la matrice argileuse qui a été calcinée comporte de la kaolinite et/ou de l'illite. Ainsi, de préférence, la matrice argileuse calcinée correspond à du métakaolin ou du métaillite.

De préférence la matrice argileuse calcinée est une matrice argileuse flashée, telle que par exemple du métakaolin issu d'une calcination flash.

L'au moins une composition complémentaire peut comporter **une matrice argileuse crue.**

Dans le cadre de l'invention, une matrice argileuse crue peut par exemple comporter au moins une espèce minérale sélectionnée parmi : Illite, Kaolinite, Smectite, Vermiculite, Chlorite, Montmorillonites, Muscovite, Halloysite, Sépiolite, et Palygorskite.

De façon préférée, la matrice argileuse crue peut comporter au moins deux types d'argiles sélectionnés parmi : Illite, Kaolinite, Smectite, Vermiculite, Chlorite, Montmorillonites, Muscovite, Halloysite, Sépiolite, Interstratifiés, Pyrophyllite, talcs, Serpentines et Palygorskite. Cela inclut les argiles dites interstratifiées qui sont des combinaisons complexes de plusieurs argiles. De façon encore plus préférée, la matrice argileuse crue peut comporter au moins une espèce minérale sélectionnée parmi : Kaolinite, Illite, Smectite, Palygorskite, Sépiolite, Chlorite, Montmorillonites, et Vermiculite.

Le tableau 1 ci-dessous présente les caractéristiques chimiques de ces espèces minérales.

**[Tableau 1]**

| | **Type d'argile** | **Composition** |
|---|---|---|
| | Illite | (K,H₃O)(Al,Mg,Fe)₂(Si,Al)₄O₁₀[(OH)₂,(H₂O)] |
| | Smectite | (Na,Ca)_{0,3}(Al,Mg)₂Si₄O₁₀(OH)₂, n H₂O |
| Matrice Argileuse Crue | Kaolinite | Al₂Si₂O₅(OH)₄ |
| | Vermiculite | (Mg,Ca)_{0,7}(Mg,Fe,Al)₆(Al,Si)₈O₂₂(OH)₄, n H₂O |
| | Chlorite | (Fe,Mg,Al)₆(Si,Al)₄O₁₀(OH)₈ |
| | Muscovite | KAl₂(AlSi₃O₁₀) (OH,F)₂ |
| | Halloysite | Al₂Si₂O₅(OH)₄ |
| | Sépiolite | Mg₄Si₆O₁₅(OH)₂, n H₂O |
| | Palygorskite | (Mg,Al,Fe³⁺)₅[Si₈O₂₀](OH)₂ (OH2)₄ n H₂O |

Selon un mode préféré, un liant pour matériau de construction selon l'invention peut comporter au moins deux types d'argiles différentes et peut comporter de la smectite (Smectite, Bentonite, Montmorillonite), de la kaolinite, et/ou de l'illite.

Le type d'argile peut être déterminé par les méthodes connues de la personne du métier par exemple après préparations spécifiques des échantillons selon la méthode dite des lames orientées (cf. Thiry et al. - 2013 - Technique de préparation des minéraux argileux en vue de l'analyse par diffraction des Rayons X et introduction à l'interprétation des diagrammes). En particulier, il sera possible d'utiliser de la diffractométrie des rayons X. Par exemple les conditions suivantes pourront être utilisées :
- Appareillage : Diffractomètre, par exemple un BRUKER D8 ADVANCE (Géométrie Bragg-Brentano) ; par exemple présentant les réglages suivants : Tube au Cuivre (λ Kα1 ≈ 1.54 Å) Puissance du générateur : 40 kV, 40 mA ; Optiques primaires : fente fixe 0.16° ; fente de Soller 2.5° ; Optique secondaire : fente de Soller 2.5° ; Détecteur LynXeye XE-T
- Paramètres d'acquisition : Balayage de 4 à 90°2θ ; Vitesse de balayage de 0,03°2θ/seconde, Temps de comptage : 480 secondes par pas ; Echantillon tournant.

Un liant de construction selon l'invention peut comporter au moins 5% en poids de matrice argileuse crue par rapport au poids sec de liant de construction, de préférence au moins 10 % en poids de matrice argileuse crue, de façon plus préférée au moins 15% en poids de matrice argileuse crue, de façon encore plus préférée au moins 20% en poids de matrice argileuse crue par rapport au poids sec de liant de construction.

Un liant de construction peut comporter au plus 50 % en poids de matrice argileuse crue par rapport au poids sec de liant de construction, de préférence au plus 40 % en poids de matrice argileuse crue par rapport au poids sec de liant de construction, de façon plus préférée au plus 30 % en poids de matrice argileuse crue par rapport au poids sec de liant de construction, de façon encore plus préférée au plus 20 % en poids de matrice argileuse crue par rapport au poids sec de liant de construction.

Un liant de construction selon l'invention peut comporter de 5 % à 50% en poids de matrice argileuse crue par rapport au poids sec de liant de construction, de préférence de 5 % à 40 % en poids de matrice argileuse crue par rapport au poids sec de liant de construction, de préférence de 5 % à 30 % en poids de matrice argileuse crue par rapport au poids sec de liant de construction et d'une façon encore plus préférée de 10 % à 30 % en poids de matrice argileuse crue par rapport au poids sec de liant de construction.

Avantageusement, la matrice argileuse crue peut présenter une D50 inférieure ou égale à 200 µm, de préférence inférieure ou égale à 150 µm, de façon plus préférée inférieure ou égale à 100 µm, de façon encore plus préférée inférieure ou égale à 80 µm.

L'au moins une composition complémentaire peut comporter **un polymère défloculant.** La présence d'un ou de plusieurs polymère(s) défloculant(s) peut améliorer les performances du matériau formé à partir du liant de construction. De nombreux composés peuvent faire office de polymères défloculants, dont beaucoup sont généralement connus de l'homme du métier.

Dans le cadre de l'invention, un liant de construction peut comporter un agent de défloculation organique, avantageusement un polymère défloculant. Selon la présente invention, un polymère défloculant organique comporte au moins un atome de carbone et de préférence au moins une liaison carbone-oxygène.

Le polymère défloculant peut être un surfactant non-ionique tel qu'un éther de polyoxyéthylène. L'éther de polyoxyéthylène peut par exemple être sélectionné parmi : un éther de lauryl poly(oxyéthylène). Le polymère défloculant peut aussi être un agent anionique tel qu'un surfactant anionique. En particulier, l'agent anionique peut être sélectionné parmi : des sulfonates d'alkylaryle, des aminoalcools, des carbonates, des silicates, des acides gras, des humates (e.g. humates de sodium), des acides carboxyliques, des lignosulfonates (e.g. lignosulfonates de sodium), des polyacrylates, des phosphates ou polyphosphates tels que l'hexamétaphosphate de sodium, le tripolyphosphate de sodium, l'orthophosphate de sodium, des carboxyméthylcelluloses et leurs mélanges.

Le polymère défloculant peut aussi être un polyacrylate. Il peut alors être sélectionné par exemple parmi du polyacrylate de sodium et du polyacrylate de d'ammonium.

Le polymère défloculant peut également être une amine sélectionnée par exemple parmi : les 2-amino-2-methyl-1-propanol ; mono-, di ou tri ethanolamine, les isopropanolamines (1-Amino-2-propanol, diisopropanolamine, triisopropanolamine) et N-alkyl ethanolamines.

De façon préférée, le polymère défloculant est sélectionné parmi : un lignosulphonate (e.g. lignosulphonate de sodium), un polyacrylate, un humate et leurs mélanges.

De façon préférée, le polymère défloculant est sélectionné parmi : un lignosulphonate (e.g. lignosulphonate de sodium), un polyacrylate, un humate, un polycarboxylate tel qu'un polycarboxylate d'ether, et leurs mélanges.

De façon plus préférée, le polymère défloculant comporte un humate, un lignosulphonate et/ou un polyacrylate.

Alternativement, le polymère défloculant peut être un mélange de composés, tel qu'un mélange comportant au moins deux composés sélectionnés parmi : surfactant non-ionique, agent anionique, polyacrylate, amine et composé organophosphoré.

Cependant, l'invention ne saurait se limiter aux polymères défloculants cités précédemment, tout type de polymères défloculants connu par l'homme du métier peut être utilisé en lieu et place desdits polymères défloculants cités précédemment.

Le polymère défloculant est de préférence sous forme d'un sel. Les polymères défloculants utilisables selon la présente invention pourront prendre une forme solide ou une forme liquide.

En particulier, l'agent de défloculation, de préférence le polymère défloculant, représente au moins 0,05 % en poids du liant de construction, de préférence au moins 0,1 % en poids du liant de construction, de façon préférée au moins 0,25 % en poids du liant de construction, de façon plus préférée au moins 0,5 % en poids du liant de construction, de façon encore plus préférée au moins 0,8 % en poids en poids du liant de construction et par exemple au moins 1 % en poids en poids du liant de construction.

En outre, l'agent de défloculation, de préférence le polymère défloculant, représente au plus 5 % en poids du liant de construction, de préférence au plus 4 % en poids du liant de construction, de façon plus préférée au plus 3 % en poids du liant de construction et de façon encore plus préférée au plus 2 % en poids du liant de construction. En effet, une concentration trop élevée n'est pas nécessaire pour former un matériau aux propriétés mécaniques avantageuses.

En particulier, l'agent de défloculation, de préférence le polymère défloculant, représente entre 0,05 % et 5 % en poids du liant de construction, de façon préférée entre 0,1 % et 4 % en poids du liant de construction, de façon plus préférée entre 0,25 % et 3 % en poids du liant de construction, de façon encore plus préférée entre 0,5 % et 2 % en poids du liant de construction et de manière encore plus préférée entre 0,8 % et 2 % en poids du liant de construction et de façon encore plus préférée entre 0,9 % et 2 % en poids du liant de construction.

Avantageusement, le polymère défloculant est mélangé au préalable avec le sous-produit issu d'un procédé de concentration du lithium. Cela permet d'améliorer notamment les performances du liant de construction en particulier lorsque le sous-produit issu d'un procédé de concentration du lithium est ajouté à une concentration supérieure à 20 % en poids du liant de construction, de préférence à partir une concentration supérieure à 30 % en poids par rapport au poids sec du liant de construction.

L'au moins une composition complémentaire peut comporter **une composition d'activation alcaline.**

De préférence, la composition d'activation alcaline peut être sélectionnée parmi : clinker, CEM I, chaux, silicates tels que le silicate de sodium, des carbonates tels que le carbonate de sodium ou leurs combinaisons. Avantageusement, l'activateur comprend des clinkers.

Par ailleurs, un liant de construction selon l'invention peut comporter au moins 5% en poids de composition d'activation alcaline par rapport au poids sec du liant de construction, de préférence au moins 10%, de façon plus préférée au moins 15 %, et de façon encore plus préférée au moins 20 % en poids d'activateur(s) par rapport au poids sec du liant de construction.

Un liant de construction selon l'invention peut comporter au plus 55% en poids de composition d'activation alcaline par rapport au poids sec du liant de construction, de préférence au plus 50%, de façon plus préférée au plus 45%, et de façon encore plus préférée au plus 40% en poids d'activateur(s) par rapport au poids sec du liant de construction.

Un liant de construction selon l'invention peut comporter de 5% à 55% en poids d'activateur(s) par rapport au poids sec du liant de construction, de préférence de 10% à 50%, de façon plus préférée de 15% à 45%, et de façon encore plus préférée de 20% à 40% en poids d'activateur(s) par rapport au poids sec du liant de construction

De préférence, le liant de construction comprend au moins 20 % en poids de CEM I en tant qu'activateur par rapport au poids sec de liant de construction.

Une des caractéristiques de la présente invention est de combiner un sous-produit de procédé de concentration de lithium avec des compositions complémentaires pour atteindre des valeurs cibles sur certains constituants du liant de construction.

L'étape de sélection 150 d'une quantité de l'au moins un sous-produit issu d'un procédé d'extraction du lithium et d'une quantité d'au moins une composition complémentaire est réalisée par un module de calcul configuré pour cela. Les données d'entrée utilisées dans cette étape 150 peuvent inclure, par exemple, des valeurs mesurées (propriétés physicochimiques, teneurs en éléments constitutifs, etc.), des consignes techniques (valeurs cibles de résistance, comportement au retrait, seuils de performance...) et des informations concernant la disponibilité des matières. Avant d'être traitées, ces données peuvent éventuellement être prétraitées : filtrage, suppression d'anomalies, normalisation ou agrégation statistique, afin de faciliter le travail de comparaison et de modélisation.

Les valeurs employées pour la détermination des quantités de sous-produit et de compositions complémentaires peuvent être issues de méthodes de mesure définies au préalable. Par exemple, la composition chimique peut être évaluée par fluorescence aux rayons X (XRF) ou spectrométrie d'émission atomique (ICP-AES). La concentration en éléments comme SiO₂, CaO, ou Al₂O₃ peut ainsi être établie, tandis que les propriétés mécaniques (résistance à la compression, retrait) sont déterminées en laboratoire sur des échantillons normalisés. Ces données sont ensuite regroupées et archivées dans une base accessible au module de calcul, qui peut être alimentée de manière périodique ou en continu, selon l'infrastructure disponible. Avant l'analyse par le module de calcul, les données collectées peuvent de préférence être soumises à un prétraitement. Cette opération peut inclure l'élimination de valeurs aberrantes si celles-ci excèdent un écart spécifié par rapport à la moyenne, une normalisation (par exemple, mise à l'échelle entre 0 et 1 ou centrage-réduction) et une agrégation statistique (calcul de moyennes ou de médianes) afin de garantir l'homogénéité des séries de mesures. Les règles de validation des données (contrôle qualité, répétabilité des mesures) sont décrites pour que l'utilisateur puisse vérifier la cohérence entre différents lots de production ou méthodes d'analyses.

L'étape de sélection 150 peut avantageusement comporter une analyse de données d'entrée (telles que des données réceptionnées) pour déterminer les quantités optimales des constituants d'un liant de construction pour atteindre des quantités finales optimales. En outre, cela peut être basé sur des rapports optimaux entre éléments chimiques essentiels sur la base de critères prédéfinis reflétant les quantités et rapports attendus pour atteindre des caractéristiques de performance souhaitées du liant. Cette détermination vise à obtenir un équilibre chimique satisfaisant ou un rapport optimal entre plusieurs variables (pourcentage d'alcalins, fraction massique de liants, etc.) dans le but d'atteindre des propriétés finales visées. Les critères prédéfinis peuvent inclure des cibles de performance mécanique (résistance à la compression, résistance à la flexion), de durabilité (résistance à la fissuration, retrait), ou d'autres paramètres opérationnels. Le module de calcul 16 peut ainsi évaluer l'écart entre les données mesurées et les objectifs attendus (par exemple, en comparant des valeurs mesurées à des plages de tolérance) puis proposer des ajustements de formulation pour corriger les écarts observés.

Ainsi, avantageusement, l'étape de sélection 150 permet d'obtenir une formulation qui lorsqu'elle est implémentée lors de la préparation d'un liant de construction permet d'obtenir des caractéristiques de performance définie. Cela concerne notamment les performances mécaniques telles que la résistance mécanique et le retrait. En particulier, les quantités sélectionnées peuvent déterminer la formulation du liant de construction et le procédé selon l'invention peut permettre une optimisation de la formulation d'un liant de construction alcaline.

En particulier, le module de calcul 16 pourra établir des comparaisons entre la ou les valeurs mesurées de propriétés physicochimiques avec des valeurs de références. Cette comparaison pourra être réalisée grâce à des abaques ou des règles expertes prédéterminées. La comparaison est suivie d'une sélection de valeurs adaptées pour les quantités des différents constituants permettant de répondre aux valeurs de références prédéfinies.

Le module de calcul 16 peut, par exemple, comparer les propriétés physicochimiques mesurées (comme la composition en oxydes SiO₂, Al₂O₃, CaO, etc.) à des valeurs de référence stockées dans une base de données ou dans un ensemble de tables (par exemple, sous forme d'abaques). Ces références peuvent être organisées par plage de valeurs jugées adéquates pour chaque paramètre. Des règles expertes peuvent ensuite être appliquées : si la teneur en silice est trop faible, le module de calcul peut proposer d'augmenter la quantité d'une composition complémentaire riche en SiO₂ ; si le ratio des oxydes alcalins est trop élevé, le module peut recommander de diminuer la proportion d'activateurs ou de modifier l'alcalinité. Cette comparaison par abaques et règles expertes peut alors conduire à une sélection chiffrée des quantités à utiliser pour chaque constituant du liant.

Alternativement, cette comparaison pourra être réalisée par un algorithme de calcul configuré pour sélectionner les compositions complémentaires et les quantités adaptées. Cet algorithme peut recourir à :
- des approches d'optimisation multi-critères (prise en compte simultanée des performances mécaniques, de la masse volumique, du coût des matières, etc.) ;
- des méthodes heuristiques (par exemple, un algorithme glouton ou une recherche locale itérative) visant à s'approcher d'une solution acceptable dans un délai donné ;
- des algorithmes évolutionnaires (comme les algorithmes génétiques) prenant en entrée un ensemble de formulations candidates et sélectionnant progressivement celles qui produisent les meilleures performances ;
- des approches de régression statistique (linéaire, polynomiale, ou par moindres carrés partiels) pour modéliser la relation entre la composition et les performances du liant ; et/ou
- des méthodes d'apprentissage (supervisé ou non supervisé).

Le procédé peut inclure une phase de création d'abaques entre les valeurs mesurées et les performances obtenues, dans le but de calibrer l'algorithme de calcul. Lors de cette étape de calibration, les mesures (par exemple, résistance à la compression ou retrait évalués à 7, 28 ou 90 jours) sont associées aux proportions initiales des différents constituants. À partir de cette base d'exemples, un modèle statistique d'apprentissage est construit :
- Les données sont éventuellement traitées sous forme de matrice (chaque ligne représentant une formulation de liant, chaque colonne représentant une caractéristique chimique ou mécanique) ;
- Les paramètres du modèle (coefficients de régression, poids d'un réseau de neurones, règles de classification...) sont ajustés pour réduire l'erreur de prédiction ; et
- Le résultat est un algorithme de calcul paramétré, capable de prédire, pour une nouvelle composition chimique, la performance associée et donc de recommander une formulation adaptée.

Pour illustrer les méthodes d'apprentissage mentionnées, on peut recourir à un modèle non supervisé (par exemple, un mélange Gaussien, une classification ascendante hiérarchique ou descendante) afin de regrouper des formulations similaires. Alternativement, on peut employer un modèle supervisé (réseaux de neurones, méthodes à noyau, méthodes d'ensembles...) afin d'estimer directement la performance attendue d'une formulation sur la base de ses paramètres de composition. De préférence, l'algorithme de calcul, une fois calibré par des données expérimentales, assure une plus grande fiabilité des choix de quantités

Cet algorithme de calcul peut avoir été construit à partir de différents modèles d'apprentissage, notamment de partitionnement, supervisés ou non supervisés. Un modèle statistique d'apprentissage non supervisé peut par exemple être sélectionné parmi un modèle de mélange Gaussien non supervisé, une classification ascendante hiérarchique (Hierarchical clustering Agglomerative en terminologie Anglo-Saxonne), une classification descendante hiérarchique (Hierarchical clustering divisive en terminologie Anglo-Saxonne). Un modèle statistique d'apprentissage supervisé peut par exemple être sélectionné parmi les méthodes à noyau (e.g. Séparateurs à Vaste Marge - Support Vector Machines SVM, Kernel Ridge Regression) décrites par exemple dans Burges, 1998 (Data Mining and Knowledge Discovery. A Tutorial on Support Vector Machines for Pattern Recognition), les méthodes d'ensembles (e.g. Bagging, Boosting, arbres de décision, Random Forest) décrites par exemple dans Brieman, 2001 (Machine Learning. Random Forests), ou les réseaux de neurones décrits par exemple dans Rosenblatt, 1958 (The perceptron: a probabilistic model for information storage and organization in the brain). De préférence, l'algorithme de calcul préalablement calibré a été obtenu par la mise en œuvre d'une méthode statistique d'apprentissage supervisé.

Avantageusement, le procédé peut comporter une étape de création d'une corrélation entre les valeurs mesurées réceptionnées de façon à calibrer un algorithme de calcul. Cette étape de corrélation, basée sur des valeurs mesurées permet de construire un algorithme de calcul à partir d'un modèle statistique d'apprentissage.

Les algorithmes d'optimisation ou de modélisation mentionnés (heuristiques, algorithmes évolutionnaires, approches statistiques) peuvent être paramétrés suivant des valeurs explicitées dans la documentation associée. Dans le cas d'un algorithme génétique, il est possible d'indiquer une taille de population (50 ou 100 « individus »), un taux de mutation (par exemple, 2 à 5 %) et un nombre maximal d'itérations (200 à 500). Lorsqu'une méthode d'apprentissage supervisé est retenue, on précise la fonction de coût (par exemple, une fonction d'erreur quadratique moyenne pour la régression ou une fonction logistique pour la classification), la procédure de validation croisée (k-fold) et les conditions d'arrêt (atteinte d'un seuil d'erreur ou d'un nombre maximal d'itérations). Ensuite, le module de calcul peut suivre un organigramme standard :
- Réception des nouvelles données (composition chimique, performances mécaniques, etc.).
- Application des routines de prétraitement (normalisation, détection des valeurs aberrantes).
- Sélection du mode d'analyse (par exemple, recherche par règles expertes si les valeurs restent dans une plage prédéfinie ; recours à un algorithme d'optimisation si les données s'écartent des plages habituelles).
- Itération interne du ou des algorithmes (évolution des solutions candidates, mise à jour des règles, réapprentissage du modèle) jusqu'à ce qu'un critère d'arrêt défini par la personne du métier soit satisfait.
- Sortie du résultat et transmission de la formulation retenue ou de plusieurs formulations jugées adaptées.

En particulier, lors de l'étape de sélection 150, les compositions complémentaires et les quantités de sous-produits et de compositions complémentaires sont sélectionnées de façon à ce que le liant de construction présente par rapport à son poids sec :
- une concentration massique en lithium inférieure ou égale à 1%, de préférence inférieure ou égale à 0,75%, de façon plus préférée inférieure ou égale à 0,5%, et de façon encore plus préférée inférieure ou égale à 0,25%.
- une concentration massique en Al₂O₃ supérieure ou égale à 5%, de préférence supérieure ou égale à 7%, de façon plus préférée supérieure ou égale à 8%, et de façon encore plus préférée supérieure ou égale à 9%.
- une concentration massique en Al₂O₃ inférieure ou égale à 15%, de préférence inférieure ou égale à 14%.
- une concentration massique en SiO₂ supérieure ou égale à 20%, de préférence supérieure ou égale à 25%, de façon plus préférée supérieure ou égale à 30%.
- une concentration massique en CaO supérieure ou égale à 35%, de préférence supérieure ou égale à 40%, de façon plus préférée supérieure ou égale à 42%.
- une concentration massique en CaO inférieure ou égale à 60%, de préférence supérieure ou égale à 57%, de façon plus préférée supérieure ou égale à 55%.
- une concentration massique en MgO inférieure ou égale à 5%, de préférence inférieure ou égale à 4%, de façon plus préférée inférieure ou égale à 3%.
- une concentration massique en Fe₂O₃ inférieure ou égale à 5%, de préférence inférieure ou égale à 4%, de façon plus préférée inférieure ou égale à 3%.

En outre, comme illustré à la figure 1, un procédé selon l'invention peut comporter en outre : une étape de fourniture 110 du sous-produit issu d'un procédé de concentration du lithium ; une étape de mesure 120a d'au moins une propriété physicochimique du sous-produit issu d'un procédé de concentration du lithium ; une étape de mesure 120b d'au moins une propriété physicochimique d'au moins une composition complémentaire ; une étape de réception 130b d'au moins une valeur physicochimique d'au moins une composition complémentaire ; une étape d'acquisition 140 d'au moins une valeur de référence ; une étape de sélection 160 d'une quantité d'additifs à ajouter à la formulation pour liant de construction.

Un procédé 100 de détermination selon la présente invention peut comporter une étape de sélection 160 d'une quantité d'au moins un additif à la formulation pour liant de construction. L'étape de sélection 160 d'au moins un additif permet de venir compléter la formulation pour liant de construction.

Les additifs peuvent par exemple correspondre à des molécules connues pour améliorer les performances des liants de constructions. Un additif sera généralement présent à une concentration massique inférieure ou égale à 10 % par rapport au poids sec du liant de construction. De préférence, le ou les additifs seront présent à une teneur cumulée inférieure ou égale à 8%, de façon plus préférée inférieure ou égale à 7% et de façon encore plus préférée inférieure ou égale à 6 %, par exemple inférieure ou égale à 5%.

Les additifs peuvent par exemple être sélectionnés parmi : des amines (telles que la triéthanolamine, la triisopropanolamine, ou l'hydroxyéthyldiéthylènetriamine), des composés à base de glycol (tel que le monoéthylène glycol, l'éthylène glycol, le diéthylène glycol, le propylène glycol), des composés phénoliques, le glycérol, le stéarate de sodium, le gluconate de sodium, ou encore le nitrate de calcium.

Selon un **autre aspect,** l'invention porte sur un **liant de construction.**

En particulier, l'invention porte sur un liant de construction susceptible d'être obtenu par le procédé de préparation d'un liant de construction selon l'invention. De façon préférée, l'invention porte sur un liant de construction obtenu par le procédé de préparation d'un liant de construction selon l'invention.

Un liant de construction selon la présente invention aura la particularité de comporter au moins un sous-produit de concentration du Lithium. Un liant de construction selon l'invention pourra aussi avoir la particularité d'avoir été préparé en suivant la formulation sélectionnée dans le cadre d'un procédé de sélection selon la présente invention. Au-delà de cette caractéristique de préparation, comme cela a été décrit lors de la description détaillée du procédé de sélection de la formulation pour ces modes de réalisations avantageux, un liant de construction selon l'invention pourra présenter des teneurs particulières pour certains éléments chimiques permettant d'atteindre des performances élevées malgré la présence de sous-produit de concentration du Lithium.

Les caractéristiques ci-après sont données pour un liant à l'état sec, de préférence déshydraté. C'est-à-dire qu'il comporte de préférence une teneur en eau inférieure à 5%, de façon plus préférée inférieure à 3% et de façon plus préférée inférieure ou égale à 2%.

De façon préférée, un liant de construction selon la présente invention présente une teneur en CaO inférieure ou égale à 60%. De façon plus préférée, un liant de construction selon la présente invention présente une teneur en CaO inférieure ou égale à 57%. De façon encore plus préférée, un liant de construction selon la présente invention présente une teneur en CaO inférieure ou égale à 55%. Cependant, la demanderesse a également identifié des concentrations minimales en CaO pour obtenir des liants de construction présentant de bonnes propriétés. Ainsi, un liant de construction selon la présente invention présente une teneur en CaO supérieure ou égale à 35%. De façon plus préférée, un liant de construction selon la présente invention présente une teneur en CaO supérieure ou égale à 40%. De façon encore plus préférée, un liant de construction selon la présente invention présente une teneur en CaO supérieure ou égale à 42%.

De façon préférée, un liant de construction selon la présente invention présente une teneur en SiO₂ supérieure ou égale à 20%. De façon plus préférée, un liant de construction selon la présente invention présente une teneur en SiO₂ supérieure ou égale à 25%. De façon encore plus préférée, un liant de construction selon la présente invention présente une teneur en SiO₂ supérieure ou égale à 30%.

De façon préférée, un liant de construction selon la présente invention présente une teneur en Li (quelle que soit la forme) supérieure ou égale à 0,1%. De façon plus préférée, un liant de construction selon la présente invention présente une teneur en Li (quelle que soit la forme) supérieure ou égale à 0,2%. De façon encore plus préférée, un liant de construction selon la présente invention présente une teneur en Li (quelle que soit la forme) supérieure ou égale à 0,4%, par exemple 0,6% en poids par rapport au poids sec du liant de construction.

Le lithium peut se présenter sous forme de LiO, LiCO₃, LiOH, LiClO₄, LiSO₄, Li₃PO₄, LiCl. La concentration en lithium peut être mesurée par ICP MS.

De façon préférée, un liant de construction selon la présente invention présente une teneur en Al₂O₃ inférieure ou égale à 15%. De façon plus préférée, un liant de construction selon la présente invention présente une teneur en Al₂O₃ inférieure ou égale à 14%. De façon préférée, un liant de construction selon la présente invention présente une teneur en Al₂O₃ supérieure ou égale à 5%. De façon plus préférée, un liant de construction selon la présente invention présente une teneur en Al₂O₃ supérieure ou égale à 7%. De façon encore plus préférée, un liant de construction selon la présente invention présente une teneur en Al₂O₃ supérieure ou égale à 8%, par exemple supérieure ou égale à 9%. La concentration en Al₂O₃ peut être mesurée par fluorescence X.

De façon préférée, un liant de construction selon la présente invention présente une teneur en MgO inférieure ou égale à 5%. De façon plus préférée, un liant de construction selon la présente invention présente une teneur en MgO préférée inférieure ou égale à 4%. De façon encore plus préférée, un liant de construction selon la présente invention présente une teneur en MgO préférée inférieure ou égale à 3%. La concentration en MgO peut être mesurée par fluorescence X.

De façon préférée, un liant de construction selon la présente invention présente une teneur en Fe₂O₃ inférieure ou égale à 5%. De façon plus préférée, un liant de construction selon la présente invention présente une teneur en Fe₂O₃ inférieure ou égale à 4%. De façon encore plus préférée, un liant de construction selon la présente invention présente une teneur en Fe₂O₃ inférieure ou égale à 3%. La concentration en Fe₂O₃ peut être mesurée par fluorescence X.

Selon **un autre aspect,** l'invention porte sur un **procédé de préparation d'un matériau de construction** obtenu à partir d'un liant de construction selon l'invention.

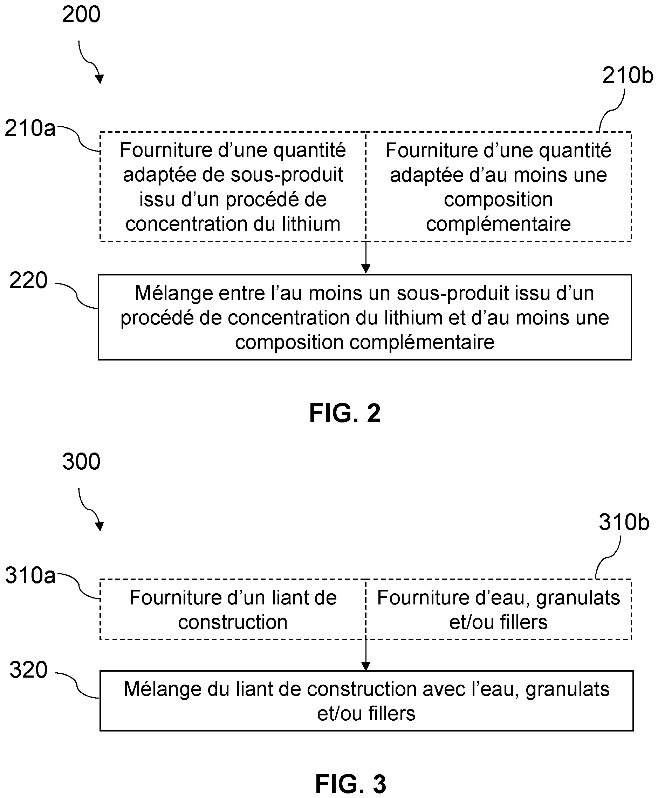

Comme illustré à la figure 3, le procédé 300 de préparation d'un matériau de construction pourra comporter une étape de fourniture 310a d'un liant de construction, et une étape de Fourniture 310b d'eau, granulats et/ou fillers. En outre le procédé comportera une étape 320 de mélange du liant de construction avec l'eau, granulats et/ou fillers. L'ajout d'eau se fera classiquement à une teneur comprise entre 0,4 et 0,6 du poids sec de liant de construction.

Ainsi, selon **un autre aspect,** l'invention porte sur un **matériau de construction** obtenu à partir d'un liant de construction selon l'invention.

Un matériau de construction selon la présente invention peut comporter des granulats. Classiquement les granulats peuvent correspondre à des granulats naturels, des granulats artificiels ou encore à des granulats recyclés.

Les granulats peuvent en outre comporter des granulats minéraux, c'est-à-dire principalement constitués de matière minérale et/ou des granulats végétaux, c'est-à-dire principalement constitués de matière d'origine végétale. Les granulats peuvent aussi comporter des granulats marins, c'est-à-dire principalement constitués de matière organique ou inorganique provenant des fonds marins telles que des granulats siliceux et/ou des substances calcaires (e.g. maërl et sables coquilliers).

Les granulats minéraux peuvent par exemple correspondent à du sable, des gravillons, des graviers, des fillers (ou matériaux fins), des poudres, déchets fossilisés et à leur combinaison.

Les granulats végétaux peuvent par exemple correspondre à du bois (copeaux ou fibres), du chanvre, de la paille, de la chènevotte de chanvre, du miscanthus, du tournesol, du typha, du maïs, du lin, des balles de riz, des balles de blé, du colza, des algues, du bambou, la ouate de cellulose, du tissu défibré et à leur combinaison

En particulier, lorsque le matériau de construction selon l'invention comporte des granulats végétaux, ledit matériau comporte de préférence au moins 0,1 % en poids de granulats végétaux, de préférence au moins 0,2 % en poids de granulats végétaux, de façon plus préférée au moins 0,5% en poids de granulats végétaux, et de façon encore plus préférée au moins 0,7% en poids de granulats végétaux.

Selon un **autre aspect,** l'invention porte sur un **système 1** de préparation d'un liant de construction. Un système 1 selon la présente invention peut être spécialement configuré pour obtenir un liant de construction à partir d'un procédé de préparation 200 d'un liant de construction selon la présente invention.

Un système de préparation d'un liant de construction selon la présente invention peut comporter un module de calcul 16 ainsi que : un réservoir 10 à sous-produit, un réservoir 11 à composition complémentaire, un réservoir 12 à additifs, un dispositif de mélange 13, d'un ou plusieurs transporteur(s) 14, et/ou un ou plusieurs moyen(s) de détection 15 d'au moins une propriété physicochimique.

En particulier, un système 1 selon la présente invention peut comporter des **réservoirs 10, 11, 12** destinés à contenir les différents constituants de la formulation pour liant de construction. Ainsi, un système 1 peut comporter au moins un réservoir 10 destiné à contenir un sous-produit issu d'un procédé de concentration du lithium. Un système 1 selon l'invention peut comprendre également au moins un réservoir 11 destiné à contenir une composition complémentaire, avantageusement le système 1 comprend au moins un réservoir 11 par différents composés de la composition complémentaire, par exemple un réservoir 11 destiné à contenir au moins un précurseur, un réservoir 11 pour la matrice argileuse crue, un réservoir 11 pour la composition d'activation alcaline et/ou un réservoir 11 pour le polymère défloculant. Avantageusement les réservoirs 10, 11, 12 peuvent être sélectionnés parmi : une cuve, un conteneur, un bac, un silo.

Un système 1 selon la présente invention peut comporter en outre **un dispositif de mélange 13.** Un dispositif de mélange 13 permet de mélanger les différents constituants de la formulation pour liant de construction. Un dispositif de mélange 13 peut être sélectionné parmi : un mélangeur de poudre ; un mélangeur à bandes ; un mélangeur à rubans concentrique ; un mélangeur à socs ; un mélangeur horizontal. Le mélangeur peut être continu ou discontinu.

Un système 1 selon la présente invention peut comporter **un ou plusieurs transporteur(s) 14.** Un transporteur 14 permet par exemple d'acheminer une quantité de l'au moins un sous-produit issu d'un procédé de concentration du lithium, d'au moins une composition complémentaire et/ou d'au moins un additif au dispositif de mélange 13. Avantageusement, chaque réservoir 10, 11, 12 est connecté au dispositif de mélange 13 par un transporteur 14 qui lui est propre.

Un transporteur 14 peut être sélectionné parmi des conduites flexibles ou non, des tapis, des convoyeurs ou des vis sans fin. En outre, en combinaison avec le ou les transporteur(s) 14, le système 1 peut comporter des pompes, des vannes, des électrovannes et des limitateurs de débits. En particulier, les limitateurs de débit peuvent être agencés en commutation fonctionnelle avec le ou les transports 14 pour réguler indépendamment la quantité de chacun des ingrédients distribués au dispositif 13 de mélange.

En outre, le système 1 selon l'invention peut comporter au moins un **moyen de mesure 15** d'au moins une propriété physicochimique. Avantageusement, le système 1 selon l'invention, comporte au moins un moyen de mesure 15 par réservoir 10, 11, 12. Ainsi, l'au moins un moyen de mesure est capable d'effectuer au moins une mesure d'au moins une propriété physicochimique de l'au moins un sous-produit issu d'un procédé de concentration du lithium, d'au moins une composition complémentaire et/ou d'au moins un additif. Un tel moyen de mesure 15 peut par exemple être un pH-mètre, un diffractomètre à rayon X, un conductimètre, un microscope électronique, un porosimètre au mercure, un spectrofluoromètre, un ICP-MS, d'une HPLC-MS, d'une GC-MS, de la mesure de la surface spécifique par la méthode BET, un granulomètre, ou encore un rhéomètre.

Un système 1 selon l'invention peut comporter un **module de calcul 16** apte à, de préférence configuré pour, mettre en oeuvre un programme informatique configuré pour réaliser :
- une étape de réception d'une valeur mesurée d'au moins une propriété physicochimique d'un sous-produit issu d'un procédé de concentration du lithium, d'au moins une composition complémentaire et/ou d'au moins un additif ;
- une étape de sélection d'une quantité de l'au moins un sous-produit issu d'un procédé de concentration du lithium pour former un liant de construction et,
- une étape de sélection d'au moins une composition complémentaire ou d'au moins une composition complémentaire et d'au moins un additif, pour former un liant de construction sur la base d'une comparaison de la ou des valeurs mesurées à des valeurs de référence.

Alternativement, un système 1 selon l'invention peut comporter un module de calcul 16 apte à, de préférence configuré pour, recevoir une formulation pour liant de construction comportant une quantité de sous-produit issu d'un procédé de concentration du lithium.

En outre, un module de calcul 16, peut permettre de contrôler le ou les transporteur(s) 14. Par exemple, le module de calcul 16 peut contrôler les le ou les transporteur(s) afin qu'il(s) achemine(nt) une quantité adaptée des différents constituants nécessaires à la formulation pour liant de construction en fonction de la ou les valeurs de références. Également, un module de calcul 16, peut permettre de contrôler le dispositif de mélange 13.

L'invention peut faire l'objet de nombreuses variantes et applications autres que celles décrites ci-dessus. En particulier, sauf indication contraire, les différentes caractéristiques structurelles et fonctionnelles de chacune des mises en oeuvre décrite ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente.

## Revendications

1. Procédé (100) de détermination d'une formulation pour un liant de construction, ledit liant de construction comportant au moins un sous-produit issu d'un procédé de concentration du lithium, ledit procédé (100) étant mis en œuvre par un dispositif informatique comportant un module de calcul (16), ledit procédé (100) comportant :
- une étape de réception (130a), par le module de calcul (16), d'une valeur mesurée d'au moins une propriété physicochimique de l'au moins un sous-produit issu d'un procédé de concentration du lithium ; et
- une étape de sélection (150), par le module de calcul (16), d'une quantité de l'au moins un sous-produit issu d'un procédé de concentration du lithium et d'une quantité d'au moins une composition complémentaire pour former un liant de construction ; ladite au moins une composition complémentaire comporte au moins : un polymère défloculant et/ou une matrice argileuse crue.

2. Procédé (100) de détermination selon la revendication 1, **caractérisé en ce que** l'au moins une propriété physicochimique de l'au moins un sous-produit issu d'un procédé de concentration du lithium est sélectionnée parmi : la teneur en lithium, la granulométrie, la teneur en impuretés, la teneur en SiO₂, la teneur en Al₂O₃, la teneur en CaO, la teneur en MgO, la teneur en Fe₂O₃, l'analyse élémentaire, la teneur en oxydes métalliques, la salinité, le pH, les propriétés rhéologiques (dont la viscosité), la surface spécifique, la concentration en composés organiques, la concentration en composés organiques volatiles, la conductivité ionique, la teneur en phase amorphe et le facteur de forme des particules.

3. Procédé (100) de détermination selon l'une des revendications 1 ou 2, **caractérisé en ce que** l'étape de sélection (150), par le module de calcul (16), comporte l'utilisation : d'une comparaison à une plage de référence, d'un calcul matriciel, d'une approche heuristique, d'une optimisation multi-critères, de systèmes experts basés sur des règles, d'algorithmes d'optimisation, d'algorithmes évolutionnaires, de modèles fondés sur la régression statistique, éventuellement combinés à des données empiriques et/ou d'un modèle d'apprentissage.

4. Procédé (100) de détermination selon l'une quelconque des revendications précédentes, **caractérisé en ce que** l'au moins un sous-produit issu d'un procédé de concentration de lithium présente une D50 inférieure ou égale à 20µm.

5. Procédé (100) de détermination d'une formulation pour liant de construction selon l'une quelconque des revendications précédentes, **caractérisé en ce qu'**il comporte en outre une étape d'acquisition (140) d'au moins une valeur de référence et **en ce que** la ou les valeurs de références comportent des corrélations entre des valeurs mesurées d'au moins une propriété physicochimique de l'au moins un sous-produit issu d'un procédé de concentration du lithium d'une part et des quantités de compositions complémentaires adaptées audit sous-produit issu d'un procédé de concentration du lithium d'autre part.

6. Procédé (100) de détermination selon la revendication 5, **caractérisé en ce qu'**il comporte en outre des comparaisons entre la ou les valeurs mesurées de propriétés physicochimiques avec des valeurs de références et **en ce que** la comparaison à des valeurs de référence correspond à l'utilisation d'un modèle d'apprentissage entrainé.

7. Procédé (100) de détermination selon l'une quelconque des revendications précédentes, **caractérisé en ce que** les quantités sélectionnées conduisent à une formulation de liant de construction présentant une concentration massique en lithium inférieure ou égale à 1%.

8. Procédé (100) de détermination selon l'une quelconque des revendications précédentes, **caractérisé en ce que** l'au moins une composition complémentaire comporte au moins un précurseur sélectionné parmi : laitiers tels que des laitiers de hauts fourneaux, des laitiers d'aciérie, des laitiers de cubilots ; des cendres volantes, des pouzzolanes naturelles, des fumées de silice, des fillers calcaires micronisés, des fillers siliceux micronisés tels que de la poudre de verre, des fillers siliceux, de la vatérite synthétique, des terres de diatomée, des scories broyées ou leurs combinaisons ; de préférence sélectionné parmi : des laitiers de hauts fourneaux, du filler calcaire micronisé ; de la vatérite telle que de la vatérite micrométrique ou nanométrique ; ou leurs combinaisons.

9. Procédé (100) de détermination selon l'une quelconque des revendications précédentes, **caractérisé en ce que** l'au moins une composition complémentaire comporte au moins un activateur sélectionné parmi : clinker, CEM I, chaux, silicates tels que le silicate de sodium, des carbonates tels que le carbonate de sodium ou leurs combinaisons.

10. Procédé (200) de préparation d'un liant de construction, ledit procédé (200) de préparation du liant de construction comportant une étape de mélange entre au moins un sous-produit issu d'un procédé de concentration du lithium et au moins une composition complémentaire selon une composition de liant de construction du procédé (100) de détermination selon les revendications 1 à 9.

11. Liant de construction susceptible d'être obtenu par le procédé (200) de préparation d'un liant de construction selon la revendication précédente, **caractérisé en ce qu'**il comprend au moins un sous-produit issu d'un procédé de concentration du lithium, et au moins une composition complémentaire, l'au moins une composition complémentaire comporte au moins une matrice argileuse crue, de préférence au moins 10 % en poids de matrice argileuse crue par rapport au poids sec de liant de construction et/ou un polymère défloculant.

12. Liant de construction selon la revendication 11, **caractérisé en ce qu'**il comporte une concentration massique en Al₂O₃ supérieure ou égale à 5% par rapport au poids sec de liant de construction.

13. Liant de construction selon l'une des revendication 11 ou 12, **caractérisé en ce qu'**il comporte une concentration massique en CaO inférieure ou égale à 60% par rapport au poids sec de liant de construction.

14. Liant de construction selon l'une quelconque des revendication 11 à 13, **caractérisé en ce que** l'au moins une composition complémentaire peut être sélectionnée en outre parmi au moins : un précurseur, et/ou une composition d'activation alcaline.

15. Liant de construction selon l'une quelconque des revendication 11 à 14, **caractérisé en ce qu'**il comporte une concentration massique en lithium d'au plus 2 % par rapport au poids sec de liant de construction.
